# EUROPÄISCHE PATENTSCHRIFT

(11) **EP 3 347 634 B1**
(45) Veröffentlichungstag und Bekanntmachung des Hinweises auf die Patenterteilung: **25.08.2021**
(21) Anmeldenummer: 15760478.6
(22) Anmeldetag: 10.09.2015
(51) Int. Cl.: F16K 37/00, F15B 9/09, F15B 13/16

(54) **FLUIDSYSTEM UND PROZESSVENTIL**
FLUID SYSTEM AND PROCESS VALVE
SYSTÈME DE FLUIDE ET SOUPAPE DE PROCÉDÉ

(43) Veröffentlichungstag der Anmeldung: 18.07.2018
(73) Patentinhaber: Festo SE & Co. KG, 73734 Esslingen (DE)
(72) Erfinder: NEEF, Bodo, 73765 Neuhausen (DE); MAILE, Christoph, 73269 Hochdorf (DE)
(74) Vertreter: Patentanwälte Magenbauer & Kollegen Partnerschaft mbB
(86) Internationale Anmeldenummer: PCT/EP2015/070766
(87) Internationale Veröffentlichungsnummer: WO 2017/041848

(56) Entgegenhaltungen:
- EP-A2- 0 648 900
- EP-A2- 1 067 319
- EP-A2- 1 270 954
- DE-A1- 19 543 876
- US-A1- 2003 182 938

## Beschreibung

Die Erfindung betrifft ein Fluidsystem mit einer sicherheitsgerichteten Ventilanordnung, die zur Beeinflussung eines Fluidstroms zwischen einer Fluidquelle oder einem Steuerventil und einem Fluidverbraucher ausgebildet ist. Ferner betrifft die Erfindung ein Prozessventil für eine Beeinflussung eines freien Querschnitts eines Fluidkanals.

Ein gattungsgemäßes Prozessventil ist aus der DE 10 2012 003 231 B3 bekannt. Dieses Prozessventil umfasst einen Steuerkopf für ein fluidisch ansteuerbares Ventil mit einem Grundkörper, der eine Kupplungseinrichtung zur Festlegung am Ventilgehäuse und einen Anschlussabschnitt zum Anschluss wenigstens eines Fluidleiters aufweist, und mit einer am Grundkörper angeordneten Steuerventileinrichtung, die zur Beeinflussung eines am Anschlussabschnitt bereitstellbaren Steuerfluidstroms zur Einwirkung auf den Ventilkörper ausgebildet ist, sowie mit einer dem Sensorrohr zugeordneten Positionsmesseinrichtung, die zur Ermittlung einer axialen Position des Positionsgebers ausgebildet ist.

Aus der DE 195 43 876 A1 ist eine Hydroanlage eines Arbeitsgerätes mit einem Hydrozylinder bekannt, wobei der Hydrozylinder zum Ausfahren, Halten oder Einfahren eines Kolbens über ein Regelventil aus einem Hydrospeicher und/oder einer Hydropumpe mit Hydraulikfluid versorgbar ist,
wobei der Hydrozylinder mehrere Wirkflächen hat, die zum Verstellen des Hydrozylinders wahlweise ansteuerbar sind und wobei jeder Wirkfläche jeweils ein Ventil zugeordnet ist und ein Steuergerät vorgesehen ist, über das die Ventile in Abhängigkeit vom Arbeitsdruck in der Druckleitung zum Hydrozylinder ansteuerbar sind.

Die EP 0 648 900 A2 offenbart eine hydraulische Vorrichtung für Baumaschinen mit einem Aktuator, insbesondere einer Kolben-Zylindereinheit, wobei eine Steuervorrichtung auf ein Zuflussdrosselventil einwirkt, das zwischen einer Pumpe und einer Schalteinheit angeordnet und wobei ein Abflussdrosselventil zwischen dem Aktuator und einem Tank installiert ist und eine Druckdifferenzsteuereinrichtung einen Druckunterschied zwischen Einlass- und Auslasskanälen des Zuflussdrosselventils steuert. Die Beschränkungsbereiche der variablen Zufluss- und Abflussdrosselventile werden unabhängig gesteuert, und das Abflussdrosselventil wird in Abhängigkeit von Schwankungen des Drucks am Aktuator gesteuert, wodurch ein Auftreten von Kavitation verhindert wird, während stets die gewünschte Steuercharakteristik bezüglich der Aktuatorantriebsgeschwindigkeit in Abhängigkeit von der Betätigung des Hebels gewährleistet ist.

Die Aufgabe der Erfindung besteht darin, ein Fluidsystem und ein Prozessventil mit verbesserten Betriebseigenschaften bereitzustellen.

Diese Aufgabe wird für ein Fluidsystem der eingangs genannten Art mit den Merkmalen des Anspruchs 1 gelöst.

Hierbei umfasst das Fluidsystem eine sicherheitsgerichtete Ventilanordnung, die zur Beeinflussung eines Fluidstroms zwischen einer Fluidquelle oder einem Steuerventil und einem Fluidverbraucher ausgebildet ist und die ein Ventilgehäuse umfasst, das einen ersten Fluidanschluss für eine fluidische Verbindung mit einem Fluidanschluss einer Fluidquelle oder eines Steuerventils und einen zweiten Fluidanschluss zur Ankopplung eines Fluidverbrauchers sowie einen Fluidkanal zwischen den Fluidanschlüssen aufweist, wobei im Fluidkanal ein erstes, zwischen einer Fluidzufuhrstellung oder Öffnungsstellung und einer Fluidabfuhrstellung oder Schließstellung elektrisch oder fluidisch ansteuerbares Ventilmittel angeordnet ist, wobei ein zweites, zwischen einer Öffnungsstellung für den Fluidkanal und einer Drosselstellung für den Fluidkanal einstellbares, elektrisch oder fluidisch ansteuerbares Ventilmittel im Fluidkanal angeordnet ist und wobei in einem Abschnitt des Fluidkanals zwischen dem ersten Ventilmittel und dem zweiten Ventilmittel ein Sensormittel zur Erfassung eines Fluiddrucks und zur Ausgabe eines fluiddruckabhängigen Sensorsignals angeordnet ist, sowie mit einer Steuereinrichtung, die zur Verarbeitung des Sensorsignals und zur Verarbeitung von Steuersignalen für die Ventilmittel ausgebildet ist.

Mit Hilfe der sicherheitsgerichteten Ventilanordnung ist es möglich, einen Fluidstrom, der von der Fluidquelle oder dem Steuerventil an den Fluidverbraucher zur Verfügung gestellt werden soll, entweder unmittelbar oder mittelbar zu beeinflussen. Bei einer unmittelbaren Beeinflussung wirkt die sicherheitsgerichtete Ventilanordnung direkt auf den Fluidstrom, der von der Fluidquelle oder vom Steuerventil bereitgestellt wird, ein. Bei einer mittelbaren Beeinflussung wirkt die sicherheitsgerichtete Ventilanordnung auf das Steuerventil ein und beeinflusst somit den Fluidstrom vom Steuerventil an den Fluidverbraucher.

Das erste Ventilmittel kann beispielsweise für eine wahlweise Freigabe oder Blockierung des Fluidkanals ausgebildet sein. Vorzugsweise ist das erste Ventilmittel für eine wahlweise Umschaltung zwischen einer Fluidzufuhrstellung, in der druckbeaufschlagtes Fluid von einer Fluidquelle zum Fluidverbraucher geleitet wird, und einer Fluidabfuhrstellung, in der druckbeaufschlagtes Fluid vom Fluidverbraucher abgeleitet wird, ausgebildet.

Ferner ist es mit Hilfe der sicherheitsgerichteten Ventilanordnung möglich, eine Funktion des ersten Ventilmittels der sicherheitsgerichteten Ventilanordnung dadurch zu prüfen, dass das zweite Ventilmittel der sicherheitsgerichteten Ventilanordnung für eine Durchführung eines Prüfvorgangs aus einer ersten Funktionsstellung, vorzugsweise der Öffnungsstellung für den Fluidkanal, in eine zweite Funktionsstellung, vorzugsweise die Drosselstellung für den Fluidkanal, eingestellt, insbesondere durch Umschaltung gebracht wird. Dabei ist in der ersten Funktionsstellung des zweiten Ventilmittels ein ungehinderter Strom des Fluids durch den Fluidkanal vorgesehen. Demgegenüber ist in der zweiten Funktionsstellung des zweiten Ventilmittels eine Drosselstellung vorgesehen, bei der eine Drosselung des Fluidstroms stattfindet. Diese Drosselung kann beispielsweise durch eine im zweiten Ventilmittel eingebaute Drossel oder durch eine Dossel in einem Teilzweig des Fluidkanals verwirklicht werden, wobei der Teilzweig dem zweiten Ventilmittel vor- oder nachgeschaltet sein kann. Vorzugsweise ist vorgesehen, dass zwischen dem zweiten Ventilmittel und dem zum Anschluss des Fluidverbrauchers vorgesehenen zweiten Fluidanschluss zwei Teilzweige des Fluidkanals parallel geführt sind, die je nach Schaltstellung des zweiten Ventilmittels in fluidisch kommunizierender Verbindung mit dem Fluidkanal gebracht werden können, der dem zweiten Ventilmittel vorgeschaltet ist. In einem der beiden Teilzweige ist eine, insbesondere einstellbare, Drossel angeordnet, die die gewünschte Drosselwirkung für diesen Teilzweig hervorruft.

Zur Durchführung des Prüfvorgangs kann das erste Ventilmittel, vorzugsweise mehrfach, zwischen der Fluidzufuhrstellung oder Öffnungsstellung und der Fluidabfuhrstellung oder Schließstellung umgeschaltet werden. Durch die jeweilige Kombination der Schaltstellungen des ersten Ventilmittels und des zweiten Ventilmittels ergeben sich bei korrekter Funktion des ersten Ventilmittels charakteristische Druckverhältnisse, die mit Hilfe des Sensormittels erfasst und in der Steuereinrichtung ausgewertet werden können. Die Steuereinrichtung ist ferner zumindest zur Erfassung, gegebenenfalls auch zur Bereitstellung, von Steuersignalen für die, insbesondere als Magnetventile ausgebildeten, Ventilmittel eingerichtet. Somit kann in der Steuereinrichtung durch Verknüpfung der ermittelten Druckwerte des Sensormittels mit den Steuersignalen geprüft werden, ob in den unterschiedlichen Schaltstellungen der Ventilmittel vorgebbare Druckwerte zumindest innerhalb eines jeweiligen, ebenfalls vorgebbaren Fehlerintervalls, eingehalten werden oder ob dies nicht der Fall ist. Aufgrund der Ausgestaltung des zweiten Ventilmittels als stets offenes Ventil, das in einer ersten Schaltstellung einen ungedrosselten und in einer zweiten Schaltstellung einen gedrosselten Durchlass aufweist und somit unabhängig von der Schaltstellung stets einen Fluidstrom zulässt, ist sichergestellt, dass ein Ausfall dieses zweiten Ventilmittels keine negativen Auswirkungen auf die Gesamtfunktion der sicherheitsgerichteten Ventilanordnung hat. Somit ist aus sicherheitsbezogenen Überlegungen heraus keine separate Überwachung des zweiten Ventilmittels erforderlich. Bevorzugt ist vorgesehen, dass die Steuereinrichtung anhand von internen erzeugten oder externen bereitgestellten Steuerbefehlen für eine Ansteuerung der beiden Ventilmittel ausgebildet ist und hierzu, bei Ausgestaltung der Ventilmittel als Magnetventile, geeignete elektrische Steuersignale bereitstellt.

Vorteilhafte Weiterbildungen der Erfindung sind in den Unteransprüchen angegeben.

Zweckmäßig ist es, wenn die Steuereinrichtung im Ventilgehäuse angeordnet und für eine Ermittlung einer aus dem Sensorsignal und den Steuersignalen ermittelten Zustandsinformation ausgebildet ist und eine Schnittstelle für eine Bereitstellung der Zustandsinformation aufweist. Hierdurch lässt sich eine vorteilhafte Abstimmung der Steuereinrichtung auf die Ventilmittel der sicherheitsgerichteten Ventilanordnung erzielen. Zum einen können durch die gemeinsame Anordnung der Steuereinrichtung und der Ventilmittel im Ventilgehäuse der sicherheitsgerichteten Ventilanordnung kurze elektrische und/oder pneumatische Verbindungen zwischen Steuereinrichtung und den Ventilmitteln verwirklicht werden. Zum anderen ist bereits bei der Konstruktion des Fluidsystems festgelegt, welche Ventilmittel für die sicherheitsgerichtete Ventilanordnung eingesetzt werden, so dass die Steuereinrichtung in vorteilhafter Weise auf diese Ventilmittel angepasst werden kann. Die Aufgaben der Steuereinrichtung umfassen exemplarisch sowohl die Bereitstellung von Steuersignalen an die Ventilmittel als auch die Ermittlung einer Zustandsinformation, die beispielsweise an eine übergeordnete Steuerungseinrichtung, insbesondere eine speicherprogrammierbare Steuerung (SPS) weitergeleitet werden kann. Diese Zustandsinformationen charakterisiert zumindest die Funktionsfähigkeit des ersten Ventilmittels, gegebenenfalls auch die Funktionsfähigkeit des zweiten Ventilmittels. Die Schnittstelle zur Bereitstellung der Zustandsinformationen kann wahlweise als elektromechanische Schnittstelle, insbesondere als Stecker oder Buchse, ausgebildet sein oder als drahtlose Schnittstelle, die eine drahtlose Übertragung der Zustandsinformationen, insbesondere unter Ausnutzung von elektromagnetischen Wellen, ermöglicht.

Bevorzugt ist vorgesehen, dass die Steuereinrichtung für eine unidirektionale oder bidirektionale Datenkommunikation mit einer übergeordneten Steuerungseinrichtung nach dem HART-Protokoll ausgebildet ist. Das HART-Protokoll (Highway Adressable Remote Transducer - Datenautobahn für adressierbaren Fernzugriff auf Messwertgeber) ermöglicht eine Kommunikation zwischen der Steuereinrichtung und einer übergeordneten Steuerung mit einer hohen Zuverlässigkeit und einem geringem technischen Aufwand. Das HART-Protokoll macht hierbei Gebrauch von einer insbesondere in der Prozessindustrie weit verbreiteten stromgestützten Signalübertragung (4 mA bis 20 mA), wobei gemäß dem HART-Protokoll auf das Stromsignal ein frequenzmoduliertes Datensignal aufgeprägt wird. Vorzugsweise ist eine bidirektionale Datenkommunikation zwischen der übergeordneten Steuerungseinrichtung und der sicherheitsgerichteten Ventilanordnung vorgesehen, wobei die übergeordnete Steuerungseinrichtung ein Stellsignal, insbesondere als Stromsignal, bereitstellt und die Steuereinrichtung das Zustandssignal auf dieses Stellsignal aufmoduliert. Besonders bevorzugt ist das Fluidsystem dazu eingerichtet, seine interne Energieversorgung ausschließlich auf Basis des bereitgestellten Stromsignals vorzunehmen und weist hierzu entsprechende schaltungstechnische Einrichtungen auf.

Bei einer vorteilhaften Weiterbildung der Erfindung ist vorgesehen, dass die Steuereinrichtung über eine elektrische Leitungsanordnung, insbesondere Busleitung oder Multipol, mit den Ventilmitteln und dem Sensormittel verbunden ist. Bei dieser Ausgestaltung des Fluidsystems ist eine von den Ventilmitteln räumlich abgesetzte Anordnung der Steuereinrichtung vorgesehen. Dies ist insbesondere dann von Interesse, wenn die sicherheitsgerichtete Ventilanordnung besonders kompakte gestaltet werden soll. Eine Kommunikation der sicherheitsgerichteten Ventilanordnung mit der Steuereinrichtung ist vorzugsweise über ein Bussystem oder eine Direktverdrahtung, die auch als Multipol bezeichnet wird, vorgesehen.

In weiterer Ausgestaltung der Erfindung ist vorgesehen, dass die Steuereinrichtung für eine von einem internen und/oder externen Signal auslösbare Durchführung eines Prüfvorgangs für das erste Ventilmittel ausgebildet ist, wobei der Prüfvorgang wenigstens eine Bewegung des ersten Ventilmittels zwischen der Öffnungsstellung und der Schließstellung sowie die Drosselstellung für das zweite Ventilmittel und einen Vergleich des Sensorsignals mit einem vorgebbaren Schwellwert beinhaltet. Mit Hilfe dieses Prüfvorgangs kann die Funktionsfähigkeit des ersten Ventilmittels in regelmäßigen oder unregelmäßigen Abständen überprüft werden. Eine Überprüfung in regelmäßigen Abständen kann beispielsweise in Abhängigkeit von einem internen Signal der Steuereinrichtung erfolgen, das beispielsweise von einem in der Steuereinrichtung ablaufenden Programm bereitgestellt wird. Ergänzend oder alternativ kann eine Überprüfung in unregelmäßigen Abständen durch Bereitstellung eines externen Signals erfolgen, das beispielsweise von einer übergeordneten Steuerungseinrichtung für den Fall bereitgestellt wird, dass ohnehin eine Wartung der mit dem Fluidsystem ausgerüsteten Anlage vorgenommen wird.

Vorteilhaft ist es, wenn dem sicherheitsgerichteten Ventilanordnung ein fluidisch vorgesteuertes Steuerventil zugeordnet ist, wobei die sicherheitsgerichtete Ventilanordnung in eine fluidische Steuerleitung des Steuerventils eingeschleift ist und für eine Beeinflussung einer Stellung eines Ventilkörpers des Steuerventils ausgebildet ist. Die Aufgabe des fluidisch Steuerventils besteht darin, einen Fluidstrom für einen Fluidverbraucher bereitzustellen oder abzuschalten, wobei ein fluidisches Steuer- oder Regelsignal für das Steuerventil insbesondere von einem vorgeschalteten Vorsteuerventil bereitgestellt wird, das seinerseits vorzugsweise als elektromechanisches Ventil, insbesondere Magnetventil, ausgebildet ist. Mit Hilfe der sicherheitsgerichteten Ventilanordnung kann somit ein Fluidstrom, der über die Steuerleitung an das Steuerventil bereitgestellt werden soll, mittelbar durch Einflussnahme auf die Stellung des fluidisch vorgesteuerten Steuerventils beeinflusst werden. Hierdurch wird erreicht, dass das einer ersten Sicherheitskategorie eines Sicherheitsstandards zugehörige Steuerventil aufgrund der Einwirkung der zugeordneten und einer zweiten Sicherheitskategorie des Sicherheitsstandards zugehörigen sicherheitsgerichteten Ventilanordnung ein sicheres Fluidsystem bilden, das gemäß der zweiten Sicherheitskategorie des Sicherheitsstandards ausgebildet ist, wobei die zweite Sicherheitskategorie auf einem höheren Niveau als die erste Sicherheitskategorie innerhalb des Sicherheitsstandards angesiedelt ist. Besonders vorteilhaft ist hierbei, dass allein durch die Hinzufügung der sicherheitsgerichteten Ventilanordnung die zweite Sicherheitskategorie erreicht und eingehalten wird und hierfür keine Änderungen an Steuerventil erforderlich sind.

Vorzugsweise ist vorgesehen, dass die Steuerleitung des Steuerventils einen Steuerzweig umfasst, der in fluidisch kommunizierender Verbindung mit einem Fluidanschluss des Steuerventils steht, wobei im Steuerzweig eine Drosseleinrichtung angeordnet ist. Durch diese Verbindung der Steuerleitung mit dem Fluidanschluss ist stets eine Rückkopplung eines am Fluidanschluss anliegenden Fluiddrucks auf das Steuerventil gewährleistet. Vorzugsweise ist das Steuerventil durch geeignete Vorspannmittel in eine Ventilstellung vorgespannt, in der kein Fluidstrom von der Fluidquelle an den Fluidverbraucher stattfindet. Bei einer Beaufschlagung der Steuerleitung mit einem geeigneten Fluiddruck wird das fluidisch vorgesteuerte Steuerventil in eine Ventilstellung bewegt, in der ein Fluidstrom zwischen Fluidquelle und Fluidverbraucher ermöglicht ist. Besonders bevorzugt ist vorgesehen, dass das Steuerventil druckausgeglichen ausgebildet ist, so dass die Ventilfunktion des Steuerventils unabhängig von dem am Versorgungsanschluss bereitgestellten und am Fluidanschluss zur Verfügung zu stellenden Fluiddruckniveau ist.

Zweckmäßig ist es, wenn der erste Fluidanschluss der sicherheitsgerichteten Ventilanordnung mit einem Fluidkanal eines Steuerventils verbunden ist und wenn der zweite Fluidanschluss der sicherheitsgerichteten Ventilanordnung als Fluidanschluss für den Anschluss des Fluidverbrauchers ausgebebildet ist, wobei das Steuerventil und die sicherheitsgerichteten Ventilanordnung eine fluidische Reihenschaltung für eine redundante Beeinflussung eines freien Querschnitts des Fluidkanals ausgebildet sind. Bei dieser Betriebsweise dient die sicherheitsgerichtete Ventilanordnung als zusätzliche Abschaltmöglichkeit für einen vom Steuerventil an den Fluidverbraucher bereitzustellenden Fluidstrom, so dass bei einem möglicherweise stattfindenden Ausfall des Steuerventils, durch den gegebenenfalls eine Abschaltung des Fluidstroms mithilfe des Steuerventils unmöglich würde, der Fluidstrom zumindest noch durch die sicherheitsgerichtete Ventilanordnung unterbrochen werden kann. Bei geeigneter Auslegung des ersten Ventilmittels der sicherheitsgerichteten Ventilanordnung kann nach erfolgter Unterbrechung des Fluidstroms zwischen Fluidquelle und Fluidverbraucher wahlweise eine dauerhafte Druckbeaufschlagung des Fluidverbrauchers beibehalten werden oder eine Entlüftung des Fluidverbrauchers durchgeführt werden.

Bei einer vorteilhaften Weiterbildung der Erfindung ist vorgesehen, dass das erste Ventilmittel in einem ersten Ventilmodul und das zweite Ventilmittel in einem zweiten Ventilmodul angeordnet sind und dass im Fluidkanal des zweiten Ventilmoduls zwischen dem ersten Ventilmittel und dem zweiten Ventilmittel ein Sperrventil angeordnet ist, wobei das Sperrventil eine mechanische Ventilbetätigung aufweist, die für eine Wechselwirkung mit dem ersten Ventilmodul ausgebildet ist und die für eine Freigabestellung des Sperrventils bei vorhandenem ersten Ventilmodul eingerichtet ist. Durch diese modulare Aufbauweise der sicherheitsgerichteten Ventilanordnung wird ein Austausch des ersten Ventilmoduls im laufenden Betrieb des Fluidsystems ermöglicht, da bei Ausbau des ersten Ventilmoduls ein mechanisch angesteuertes Sperrventil im zweiten Ventilmodul angesteuert wird, das als Rückschlagventil ausgebildet ist und das eine zu diesem Zeitpunkt unerwünschte Fluidströmung durch den Fluidkanal verhindert. Sobald das erste Ventilmodul in fluidisch kommunizierender Kopplung mit dem zweiten Ventilmodul steht, kann der angeschlossene Fluidverbraucher wieder regulärer Weise betrieben werden. Bevorzugt handelt es sich bei dem Fluidverbraucher um eine Komponente, die während eines normalen Betriebs selten oder möglicherweise nicht betätigt wird und die auch als Low-Demand-Komponente bezeichnet wird, so dass zumindest innerhalb eines gewissen Zeitfensters ein Austausch des ersten Ventilmoduls ohne relevanten Einfluss auf die Funktion des Fluidverbrauchers ist.

In weiterer Ausgestaltung der Erfindung ist vorgesehen, dass ein Sensor elektrisch mit der Steuereinrichtung verbunden ist und dass die Steuereinrichtung für eine Bereitstellung von Steuersignalen für die Ventilmittel in Abhängigkeit von Sensorsignalen des Sensors ausgebildet ist. Ein solcher Sensor kann beispielsweise eine Funktion des Fluidverbrauchers überprüfen, um beispielsweise feststellen zu können, dass der Fluidverbraucher eine vorgegebene Bewegung nicht durchführt. Alternativ kann der Sensor auch für eine Ermittlung einer physikalischen Größe abseits des Fluidsystems ausgebildet sein, beispielsweise einer physikalischen Größe, die in einem Prozesssystem auftritt, dem das Fluidsystem zugeordnet ist. Exemplarisch kann vorgesehen sein, dass der Sensor eine Temperatur oder einen Druck in einem Reaktorgefäß ermittelt, bei dem das Fluidsystem für eine Bereitstellung eines Fluids zugeordnet ist und eine Abschaltung der Fluidzufuhr erfolgen muss, sofern die ermittelte physikalische Größe außerhalb eines vorgebbaren Intervalls liegt.

Die Aufgabe der Erfindung wird auch durch ein Prozessventil gelöst, das für eine Beeinflussung eines freien Querschnitts eines Fluidkanals ausgebildet ist und das ein Ventilgehäuse aufweist, das von einem Fluidkanal durchsetzt ist, der in einen Eingangsanschluss und in einen Ausgangsanschluss mündet, die jeweils am Ventilgehäuse ausgebildet sind, mit einem beweglich im Ventilgehäuse aufgenommenen und für eine Beeinflussung eines freien Querschnitts des Fluidkanals ausgebildeten Ventilkörper, mit einem Fluidaktor, der für eine fluidgesteuerte Bewegungseinleitung auf den Ventilkörper ausgebildet ist und mit einem Fluidsystem nach einem der Ansprüche 1 bis 10. Ein solches Prozessventil dient zur Steuerung eines Fluidstroms eines Prozessfluids, beispielsweise im Bereich der chemischen Industrie oder der Lebensmittelindustrie und weist hierzu ein Ventilgehäuse auf, in dem ein Fluidkanal ausgebildet ist. Dem Fluidkanal ist ein beweglicher Ventilkörper zugeordnet, der eine Einflussnahme auf einen freien Querschnitts des Fluidkanals ermöglicht und insbesondere in beliebige Stellungen zwischen einer Schließstellung und einer Öffnungsstellung gebracht werden kann. Hierzu ist dem Ventilkörper ein Fluidaktor zugeordnet, bei dem es sich beispielsweise um einen Fluidzylinder oder einen fluidischen Schwenkantrieb handeln kann. Eine Bereitstellung von druckbeaufschlagtem Fluid an den Fluidaktor erfolgt mit Hilfe des Steuerventils, das mit der Fluidquelle verbunden ist und das an einem Arbeitsanschluss einen Fluidstrom von der Fluidquelle bereitstellen kann. Um ohne technische Eingriffe in das Steuerventil eine Funktion des Fluidaktors gemäß einer vorgebbaren Sicherheitskategorie zu ermöglichen, die innerhalb eines gegebenen Sicherheitsstandards höher als die Sicherheitskategorie des Steuerventils ist, wird dem Fluidanschluss des Steuerventils die sicherheitsgerichtete Ventilanordnung zugeordnet, die eine Blockierung des Fluidstroms an den Fluidanschluss ermöglicht und die vorzugsweise von einer sicherheitsgerichteten Steuerungseinrichtung angesteuert werden kann. Durch die Hinzufügung dieser sicherheitsgerichteten Ventilanordnung, die den Anforderungen einer Sicherheitskategorie innerhalb des gegebenen Sicherheitsstandards oberhalb der Sicherheitskategorie für das Steuerventil genügt, kann die Sicherheitskategorie für das Prozessventil erhöht werden, ohne dass hierfür sämtliche Komponenten des Prozessventils den Anforderungen der höheren Sicherheitskategorie genügen müssen.

Vorteilhafte Ausführungsformen der Erfindung sind in der Zeichnung dargestellt. Hierbei zeigt:
- Figur 1: eine schematische Schaltbilddarstellung einer ersten Ausführungsform eines Fluidsystems, das eine sicherheitsgerichtete Ventilanordnung und ein Steuerventil umfasst, wobei die sicherheitsgerichtete Ventilanordnung für eine Einflussnahme auf einen Steuerfluidstroms für das Steuerventil ausgebildet ist,
- Figur 2: eine schematische Schaltbilddarstellung einer zweiten Ausführungsform eines Fluidsystems, bei dem die sicherheitsgerichtete Ventilanordnung für eine Einflussnahme auf einen Steuerfluidstroms für das Steuerventil ausgebildet ist,
- Figur 3: eine schematische Schaltbilddarstellung einer dritten Ausführungsform eines Fluidsystems, das eine sicherheitsgerichtete Ventilanordnung und ein Steuerventil umfasst, wobei die sicherheitsgerichtete Ventilanordnung für eine Einflussnahme auf einen vom Steuerventil bereitstellbaren Arbeitsfluidstrom ausgebildet ist, und
- Figur 4: eine Variante für eine Baugruppe aus Ventilmittel und Drossel für die sicherheitsgerichteten Ventilanordnungen der ersten bis dritten Ausführungsform.

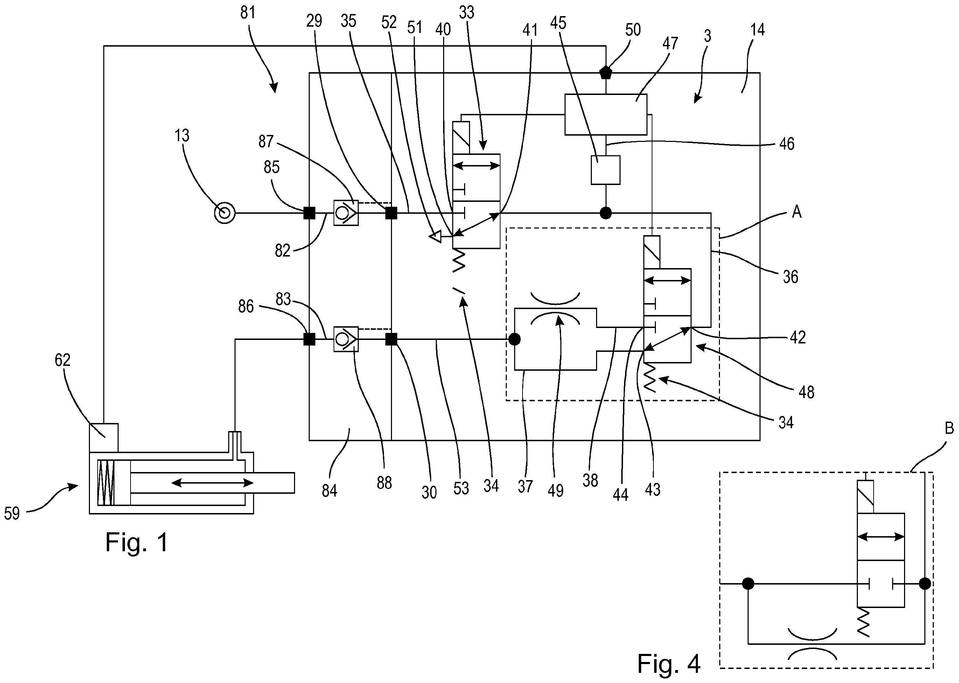

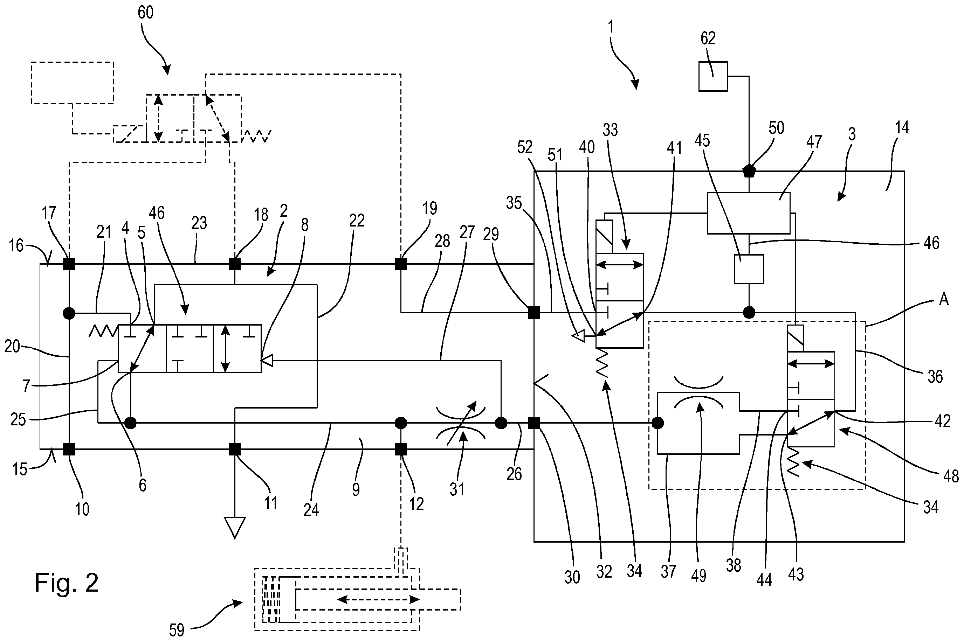

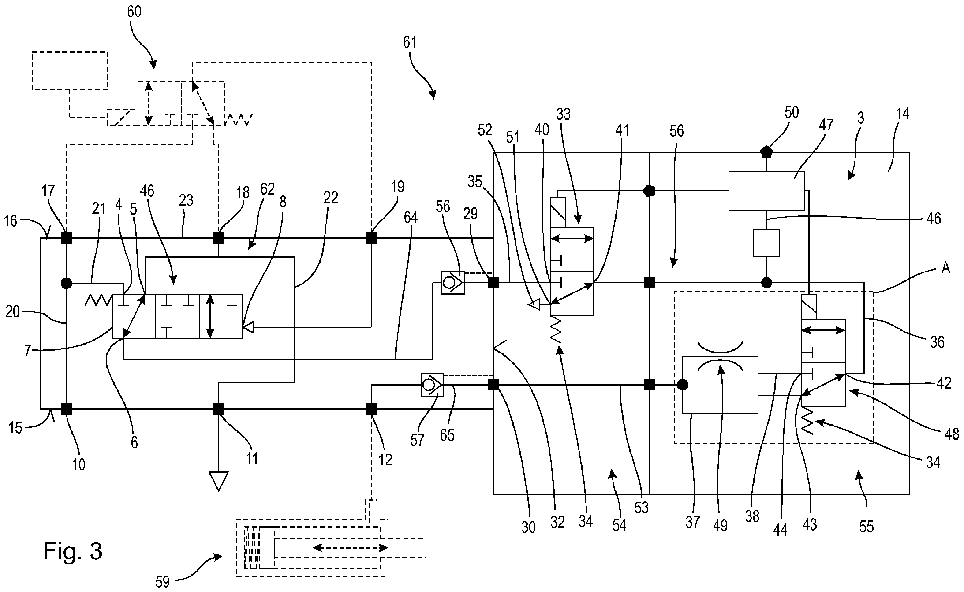

Bei der nachstehenden Beschreibung der in den Figuren 1, 2 und 3 dargestellten Ausführungsformen eines Fluidsystems werden für funktionsgleiche Komponenten die gleichen Bezugszeichen verwendet. Zunächst erfolgt eine Beschreibung der in Figur 2 dargestellten zweiten Ausführungsform, daran schließen sich die Beschreibungen der in Figur 1 dargestellten ersten Ausführungsform und der in Figur 3 dargestellten dritten Ausführungsform an. In alle Ausführungsformen, wie sie in den Figuren 1 bis 3 dargestellt sind, kann die Baugruppe gemäß der Figur 4 als Alternative zum nachstehend näher beschriebenen zweiten Ventilmittel und der zugeordneten Drossel verwendet werden.

Gemäß der Darstellung der Figur 2 umfasst eine zweite Ausführungsform eines Fluidsystems 1 ein exemplarisch als 3/3-Wegeventil ausgebildetes Steuerventil 2 sowie eine sicherheitsgerichtete Ventilanordnung 3.

Beispielhaft ist das Steuerventil 2 als fluidisch vorgesteuertes, druckausgeglichenes Ventil ausgebildet, das exemplarisch drei interne Fluidanschlüsse 4, 5, 6 sowie zwei interne Steueranschlüsse 7, 8 umfasst. Ferner sind an einer Verbindungsoberfläche 15 eines Ventilgehäuses 9 des Steuerventils 2 ein Versorgungsanschluss 10, ein exemplarisch mit einem Abluftschalldämpfer versehener Abluftanschluss 11 sowie ein Arbeitsanschluss 12 ausgebildet. Die Verbindungsoberfläche 15 dient beispielsweise für eine kundenseitige Ankopplung einer nicht dargestellten Fluidquelle, eines nicht dargestellten Schalldämpfers und eines gestrichelt dargestellten Fluidverbrauchers 59 an das Steuerventil 2. An einer Kopplungsoberfläche 16 des Ventilgehäuses 9 sind ein Versorgungsanschluss 17, ein Abluftanschluss 18 sowie ein Arbeitsanschluss 19 ausgebildet. Die Kopplungsoberfläche 16 dient beispielsweise für eine Ankopplung eines gestrichelt dargestellten Vorsteuerventils 60 an das Steuerventil 2.

In dem Ventilgehäuse 9 sind eine Reihe von Fluidkanälen 20 bis 27 ausgebildet, die die internen Fluidanschlüsse 4, 5 und 6 und die internen Steueranschlüsse 7, 8 mit den Versorgungsanschlüssen 10, 17, den Abluftanschlüssen 11, 18 und den Arbeitsanschlüssen 12, 19 verbinden.

Bei der in Figur 2 dargestellten zweiten Ausführungsform des Steuerventils 2 sind die beiden Versorgungsanschlüsse 10, 17 direkt und unterbrechungsfrei über den Fluidkanal 20 miteinander gekoppelt. Vom Fluidkanal 20 zweigt ein Fluidkanal 21 ab, der mit dem Fluidanschluss 4 verbunden ist. Die Abluftanschlüsse 11 und 18 sind über den Fluidkanal 22 unmittelbar und unterbrechungsfrei verbunden, wobei ein Fluidkanal 23 den Fluidkanal 22 mit dem Fluidanschluss 5 verbindet. Der Arbeitsanschluss 12 ist über den Fluidkanal 24 mit dem Fluidanschluss 6 verbunden, ferner erstreckt sich vom Fluidkanal 24 ein Fluidkanal 25 zum Steueranschluss 7. Darüber hinaus ist der Arbeitsanschluss 12 mit einem Fluidkanal 26 verbunden, der zum einen in einem als Steuereingang 29 bezeichneten Fluidanschluss der als separate Baugruppe ausgebildeten, sicherheitsgerichteten Ventilanordnung 3 einmündet und zum anderen über den Fluidkanal 27 mit dem Steueranschluss 8 verbunden ist. Dabei ist zwischen dem Arbeitsanschluss 12 und der Abzweigung für den Fluidkanal 27 eine, vorzugsweise elektrisch oder manuell einstellbare, Drossel 31 angeordnet, deren Funktion für die fluidische Verschaltung im Steuerventil 2 nachstehend näher beschrieben wird. Der Arbeitsanschluss 19 steht über einen Fluidkanal 28 mit einem als Steuerausgang 30 bezeichneten Fluidanschluss der sicherheitsgerichteten Ventilanordnung 3 in fluidisch kommunizierender Verbindung. Der Steuereingang 29 und der Steuerausgang 30 der sicherheitsgerichteten Ventilanordnung 3 sind einer Verbindungsoberfläche 32 des Ventilgehäuses 9 zugeordnet.

Die sicherheitsgerichtete Ventilanordnung 3 umfasst exemplarisch ein Ventilgehäuse 14, in dem ein als elektrisch ansteuerbares 3/2-Wege Ventil ausgebildetes erstes Ventilmittel 33 angeordnet ist, das vorzugsweise als Magnetventil ausgebildet ist und das aufgrund eines vorgespannten Federmittels 34 ohne Bereitstellung elektrischer Energie in eine Vorzugsstellung vorgespannt ist, wie sie in der Figur 2 dargestellt ist. Bei Bereitstellung von elektrischer Energie an das Ventilmittel 33 kann dieses aus der in Figur 2 dargestellten Vorzugsstellung in eine nicht dargestellte Schaltstellung gebracht werden. Während in der Vorzugsstellung eine Verbindung zwischen dem Steuereingang 29 und dem Steuerausgang 30 durch das Ventilmittel 33 unterbrochen ist, wird diese Verbindung in der Schaltstellung hergestellt. Dementsprechend kann Fluid vom Steuereingang 29 über den Fluidkanal 35 an einen Fluidanschluss 40 des Ventilmittels 33 bereitgestellt werden und von dort über den Fluidanschluss 41 an den Fluidkanal 36 weitergeleitet werden. Der Fluidkanal 36 ist mit einem Fluidanschluss 42 des exemplarisch ebenfalls als elektrisch ansteuerbares 3/2-Wegeventil ausgebildeten, im Ventilgehäuse 14 aufgenommenen zweiten Ventilmittels 48, das vorzugsweise als mit einem Federmittel 34 in eine Vorzugsstellung vorgespanntes Magnetventil ausgebildet ist, verbunden. Da sowohl an einem Fluidanschluss 43 als auch an einem Fluidanschluss 44 des Ventilmittels 48 jeweils ein Fluidkanal 37, 38 angeschlossen sind, die über einen gemeinsamen Fluidkanal 39 mit dem Steuerausgang 30 in fluidisch kommunizierender Verbindung stehen, liegt unabhängig von einer Schaltstellung des Ventilmittels 48 stets eine fluidisch kommunizierende Verbindung zwischen dem Fluidanschluss 41 des Ventilmittels 33 und dem Steuerausgang 30 vor. Dabei ist vorgesehen, dass der Fluidkanal 38 mit einer Drossel 49 versehen ist, so dass im Fluidkanal 38 verglichen mit dem Fluidkanal 37 ein erhöhter Strömungswiderstand für das Fluid vorliegt.

Dem Fluidkanal 36 ist ein beispielhaft als Drucksensor ausgebildetes Sensormittel 45 zugeordnet, das für eine Druckerfassung für den Fluidstrom im Fluidkanal 36 ausgebildet ist und in Abhängigkeit vom erfassten Druck ein elektrisches Sensorsignal über eine Signalleitung 46 an eine Verarbeitungseinrichtung 47 bereitstellen kann. Die Verarbeitungseinrichtung 47 ist exemplarisch als Mikroprozessor ausgebildet und dient neben einer Verarbeitung des Sensorsignals des Sensormittels 45 auch zur elektrischen Ansteuerung der Ventilmittel 33 und 48 und steht hierzu über nicht bezeichnete Steuerleitungen in elektrischer Verbindung mit diesen Ventilmitteln 33, 48. Ferner umfasst die Verarbeitungseinrichtung 47 eine Schnittstelle 50, die für eine bidirektionale Datenkommunikation mit einer nicht dargestellten, übergeordneten Steuerungseinrichtung und gegebenenfalls mit anderen Komponenten, beispielsweise zusätzlichen Sensoren ausgebildet ist. Vorzugsweise ist eine Bereitstellung von Steuersignalen von der übergeordneten Steuerungseinrichtung an die Verarbeitungseinrichtung 47 gemäß dem HART-Protokoll vorgesehen. Gegebenenfalls kann auch eine Einkopplung von Sensorsignalen eines externen Sensors 62, der an der Schnittstelle 50 angeschlossen wird, in die Verarbeitungseinrichtung 47 vorgenommen werden, wo die Sensorsignale verarbeitet werden können und ein Verarbeitungsergebnis der Verarbeitungseinrichtung 47 beeinflussen können. Bei dem Sensor 62 kann es sich exemplarisch um einen dem Fluidverbraucher 59 zugeordneten Zylinderschalter, einen Positionssensor für eine Ermittlung einer Kolbenposition des Fluidverbrauchers 59 oder um einen sonstigen Sensor, beispielsweise einen Prozesssensor zur Ermittlung eines Betrag einer physikalischen Größe, die in Zusammenhang mit dem Fluidsystem 1 steht, handeln.

Exemplarisch ist die Verarbeitungseinrichtung 47 in der sicherheitsgerichteten Ventileinrichtung 3 integriert. Bei einer alternativen, nicht dargestellten Ausführungsform ist die Verarbeitungseinrichtung als separate Komponente ausgebildet und abseits der Ventileinrichtung angeordnet und mit dieser elektrisch verbunden.

Die Funktionsweise des in Figur 2 dargestellten Fluidsystems 1 wird nachstehend im Hinblick auf die wichtigsten Vorgänge beschrieben. Dabei wird davon ausgegangen, dass das Steuerventil 2 mit seinem Versorgungsanschluss 17, seinem Abluftanschluss 18 und seinem Arbeitsanschluss 19 mit dem gestrichelt dargestellten Vorsteuerventil 60 verbunden ist, das wahlweise eine fluidisch kommunizierende Verbindung zwischen dem Versorgungsanschluss 17 und dem Arbeitsanschluss 19 oder dem Abluftanschluss 18 und dem Arbeitsanschluss 19 herstellen kann und das nicht Teil des Fluidsystems 1 ist.

Ferner wird davon ausgegangen, dass am Arbeitsanschluss 12 ein exemplarisch in gestrichelter Darstellung als einfachwirkender, federvorgespannter Pneumatikzylinder ausgebildeter Fluidverbraucher 59 angeschlossen ist, der alternativ beispielsweise als pneumatischer Schwenkantrieb ausgebildet sein könnte und der nicht Bestandteil des Fluidsystems 1 ist. Dieser Fluidverbraucher 59 ist beispielsweise als Ventilantrieb für ein nicht dargestelltes Prozessventil vorgesehen und mit dessen Ventilkörper bewegungsgekoppelt, wobei der Ventilkörper des Prozessventils einen freien Querschnitt eines Fluidkanals beeinflusst. Somit kann mit Hilfe des Fluidverbrauchers 59 ein Volumenstrom eines Prozessfluids freigegeben oder abgesperrt werden. Eine Betätigung dieses Prozessventils ist vorzugsweise selten oder praktisch nie vorgesehen, dennoch muss gewährleistet werden, dass das Prozessventil stets betriebsbereit ist, so dass zu diesem Zweck in regelmäßigen oder unregelmäßigen Abständen eine kurzzeitige Bewegung des Ventilkörpers des Prozessventils durchgeführt wird. Um zusätzlich auch die Überprüfung der Funktionsfähigkeit des zur Bereitstellung von druckbeaufschlagtem Fluid an den Fluidverbraucher 59 vorgesehenen Fluidsystems zu ermöglichen, ist dieses Fluidsystem in nachstehend näher beschriebener Weise eingerichtet.

Beispielhaft wird davon ausgegangen, dass der Arbeitsanschluss 12 für die Ansteuerung des nicht dargestellten Prozessventils dauerhaft mit einem am Versorgungsanschluss 10 zur Verfügung gestellten Fluiddruck versorgt werden soll. Dementsprechend muss das Steuerventil 2 aus der in Figur 2 dargestellten Vorzugsstellung in eine Funktionsstellung umgeschaltet werden, in der eine fluidisch kommunizierende Verbindung zwischen dem Fluidkanal 21 und dem Fluidkanal 24 vorliegt. Dies wird dadurch bewirkt, dass am Arbeitsanschluss 19 mit Hilfe des lediglich gestrichelt dargestellten Vorsteuerventils 60 ein Steuerdruck bereitgestellt wird, der nach Passieren der sicherheitsgerichteten Ventilanordnung 3 über die Fluidkanäle 26 und 27 am Steueranschluss 8 des Steuerventils 2 anliegt. Um nunmehr festzustellen, ob das zur Erhöhung des Sicherheitsniveaus des Fluidsystems 1 vorgesehene erste Ventilmittel 33 ordnungsgemäß funktioniert, ohne hierbei die Funktion des Steuerventils 2 zu beeinträchtigen, ist vorgesehen, zunächst das zweite Ventilmittel 48 aus der Vorzugsstellung, wie sie in der Figur 2 dargestellt ist, in eine nicht dargestellte Drosselstellung zu bringen, bei der eine fluidisch kommunizierende Verbindung zwischen dem Fluidkanal 36 und dem Steuerausgang 30 über den Fluidkanal 38 vorliegt. Anschließend wird das erste Ventilmittel 33 mehrfach zwischen der Vorzugsstellung gemäß der Figur 2 und der nicht dargestellten Schaltstellung umgeschaltet und ein Druckverlauf im Fluidkanal 36 mit Hilfe des Sensormittels 45 ermittelt. Da ein Fluidanschluss 51 des ersten Ventilmittels 33 mit einem Abluftanschluss 52 verbunden ist, findet in der Vorzugsstellung des ersten Ventilmittels 33 ein Druckabfall in der Fluidleitung 36 statt. In der nicht dargestellten Funktionsstellung des ersten Ventilmittels 33 findet hingegen ein Druckaufbau in der Fluidleitung 36 bis auf ein vorgebbares Druckniveau statt, sofern das Steuerventil 2 am Steuereingang 29 einen entsprechenden Fluiddruck bereitstellt. Aufgrund der Drosselwirkung sowohl der Drossel 49 als auch der Drossel 31 ist eine Geschwindigkeit für den Druckabfall in der Fluidleitung 36 begrenzt, so dass bei kurzen Schaltzeiten für das erste Ventilmittel 33 keine Beeinträchtigung für das über den Steuerausgang 30 angesteuerte Steuerventil 2 eintritt. Stellt sich jedoch trotz einer Umschaltung des Ventilmittels 33 zwischen den beiden Schaltstellungen kein anhand des Sensorsignals des Sensormittels 45 in der Verarbeitungseinrichtung 47 nachvollziehbarer Druckverlauf ein, der einem vorgegebenen Druckverlauf entspricht, so kann die Verarbeitungseinrichtung 47 an der Schnittstelle 50 ein Fehlersignal ausgegeben. Stellt sich hingegen in der Verarbeitungseinrichtung 47 ein erwarteter Druckverlauf ein, so kann wahlweise die Ausgabe eines positiven Bestätigungssignals oder keines Signals an der Schnittstelle 50 vorgesehen sein. Anschließend wird das Ventilmittel 48 wieder in die Vorzugsstellung umgeschaltet, wie sie in der Figur 2 dargestellt ist, um den Prüfungsvorgang abzuschließen.

Bei der in Figur 1 dargestellten ersten Ausführungsform eines Fluidsystems 81 ist der Aufbau der sicherheitsgerichteten Ventilanordnung 3 identisch wie bei der zweiten Ausführungsform gemäß der Figur 2. Um Unterschied zu dieser zweiten Ausführungsform des Fluidsystems 1 ist bei der ersten Ausführungsform des Fluidsystems 81 gemäß der Figur 1 ein Direktanschluss einer Fluidquelle 13 am Steuereingang 29 und ein Direktanschluss des Fluidverbrauchers 59 am Steuerausgang 30 vorgesehen. Bei dieser Ausführungsform dient die sicherheitsgerichtete Ventilanordnung 3 somit einer unmittelbaren Versorgung des Fluidverbrauchers 59 mit druckbeaufschlagtem Fluid aus der Fluidquelle 13 sowie einer Fluidabfuhr aus dem Fluidverbraucher 59 bei entsprechender Schaltstellung des exemplarisch als 3/2-Wegeventil ausgebildeten ersten Ventilmittels 33. Die Überprüfung der Schaltfunktion für das erste Ventilmittel 33 kann bei der ersten Ausführungsform des Fluidsystems 81 in gleicher Weise erfolgen wie bei der vorstehend beschriebenen Überprüfung der Schaltfunktion für die zweite Ausführungsform des Fluidsystems 1. Zur Verbesserung der Handhabung dieses fluidischen Systems 81 ist eine Kanalplatte 84 vorgesehen, durch die die Fluidkanäle 35 und 53 als Fluidkanäle 82, 83 hindurchgeführt sind und an Fluidanschlüssen 85, 86 ausmünden, an denen die Fluidquelle 13 und der Fluidverbraucher 59 angeschlossen sind. In jedem der Fluidkanäle 82, 83 ist jeweils ein mechanisch angesteuertes Rückschlagventil 87, 88 angeordnet. Diese Rückschlagventile 87, 88 gelangen bei Entfernung der sicherheitsgerichteten Ventilanordnung 3 aus der dargestellten Öffnungsstellung in eine nicht dargestellte Sperrstellung, so dass kein Fluidstrom vom Fluidverbraucher 59 über den Fluidkanal 83 austreten kann. Ferner kann auch kein druckbeaufschlagtes Fluid von der Fluidquelle 13 aus dem Fluidkanal 82 in die Umgebung austreten. Bei neuerlicher Anbringung der sicherheitsgerichteten Ventilanordnung 3 an die Kanalplatte 84 gelangen die rein mechanisch angesteuerten Rückschlagventile 87, 88 wieder in die Freigabestellung und ermöglichen somit einen Fluidstrom von der Fluidquelle 13 in die sicherheitsgerichtete Ventilanordnung 3 und von dort in Abhängigkeit von der Schaltstellung des ersten Ventilmittels 33 zum Fluidverbraucher 59.

Bei der in Figur 3 dargestellten dritten Ausführungsform eines Fluidsystems 61 ist ein weitgehend identischer Aufbau für die sicherheitsgerichtete Ventilanordnung 3 wie bei der ersten und zweiten Ausführungsform 81, 1 vorgesehen. Auch die vorstehend beschriebene Prüfung für die Funktionsfähigkeit der Ventilanordnung 3 gemäß der Figur 2 ist in gleicher Weise für die Ausführungsform der Ventilanordnung 3 gemäß der Figur 3 vorzusehen.

Abweichend von der Darstellung der Figur 2 und übereinstimmten mit der Darstellung der Figur 1 ist bei der Figur 3 eine unmittelbare Einflussnahme der sicherheitsgerichteten Ventilanordnung 3 auf den Fluidstrom zwischen dem Arbeitsanschluss 19 und dem Arbeitsanschluss 12 vorgesehen. Dementsprechend ist vom Arbeitsanschluss 19, der mit dem nur gestrichelt dargestellten elektromechanischen Vorsteuerventil 60 in fluidisch kommunizierender Verbindung steht, ein Fluidkanal 63 an den Steueranschluss 8 des Steuerventils 62 geführt, so dass keine Einwirkung der sicherheitsgerichteten Ventilanordnung 3 auf die Ventilstellung des Steuerventils 2 stattfindet. Vielmehr ist vorgesehen, dass ein vom Fluidanschluss 6 abgehender Fluidkanal 64 an den Steuereingang 29 geführt ist und von dort in fluidisch kommunizierender Verbindung mit dem Fluidkanal 35 in der sicherheitsgerichteten Ventilanordnung 3 verbunden ist. Dementsprechend ist der Steuerausgang 30, der mit dem Fluidkanal 39 der sicherheitsgerichteten Ventilanordnung fluidisch kommunizierend verbunden ist, im Steuerventil 62 über den Fluidkanal 65 mit dem Arbeitsanschluss 12 verbunden. Hierdurch ergibt sich, dass ein vom Steuerventil 62 ausgehend vom Versorgungsanschluss 10 am Fluidanschluss 6 bereitgestellter Fluidstrom zunächst über die sicherheitsgerichtete Ventilanordnung 3 geführt ist, bevor dieser Fluidstrom den Arbeitsanschluss 12 erreicht. Dementsprechend kann mit Hilfe der sicherheitsgerichteten Ventilanordnung 3 der Fluidstrom am Arbeitsanschluss 12 unabhängig von der Schaltstellung des Steuerventils 62 gesperrt werden, wozu das erste Ventilmittel 33 eingesetzt wird. Da in diesem Fall das Ventilmittel 33 eine für das Sicherheitsniveau des Fluidsystems 61 zentrale Rolle einnimmt, kann dieses in gleicher Weise wie vorstehend für das Fluidsystem 1 gemäß der Figur 2 beschrieben, unter Zuhilfenahme des Ventilmittels 48 geprüft werden, ohne dass hierbei eine Beeinträchtigung der Funktion des am Arbeitsanschluss 12 angeschlossenen Fluidverbrauchers 59 eintritt.

Exemplarisch ist die sicherheitsgerichtete Ventilanordnung 3 modular aufgebaut, wobei ein erstes Modul 54 exemplarisch das erste Ventilmittel 33 enthält. Ein zweites Modul 55 enthält exemplarisch das zweite Ventilmittel 48 sowie das Sensormittel 45 und die Verarbeitungseinrichtung 47. Bei Ermittlung einer Fehlfunktion für das erste Ventilmittel 33 kann das erste Modul 54 ausgetauscht werden, ohne dass hierbei eine sofortige Beeinträchtigung der Funktion des nachgeschalteten Fluidverbrauchers 59 eintritt.

Hierzu sind in den Fluidkanälen 64 und 65 des Steuerventils 62 jeweils z gesteuerte Rückschlagventile 56 angeordnet. Diese Rückschlagventil 56,57 gelangen bei Entfernen des ersten Moduls 54 aus der dargestellten Freigabestellung in eine nicht dargestellte Sperrstellung, so dass kein Fluidstrom vom Fluidverbraucher 59 über den Fluidkanal 65 austreten kann. Ferner kann auch kein druckbeaufschlagtes Fluid aus dem Fluidkanal 64 in die Umgebung austreten. Bei der Montage des ersten Moduls 54 gelangen die vorzugsweise rein mechanisch angesteuerten Rückschlagventile aus der nicht näher dargestellten in die dargestellte Freigabestellung und ermöglichen somit einen Fluidstrom durch die Fluidkanäle 64 und 65.

Die in der Figur 4 dargestellte, mit B bezeichnete Baugruppe umfasst ein zweites Ventilmittel 148, das zusammen mit einer zugeordneten Drossel 149 anstelle des Ventilmittels 48 und der Drossel 49 in eine der drei vorstehend angeführten Ausführungsformen der Fluidsysteme 1, 61, 81 integriert werden kann. Exemplarisch ist das Ventilmittel 148 als 2/2-Wegeventil ausgebildet. Ferner ist die Drossel 149 in einen Teilzweig 150 eingeschleift, der parallel zu einem Teilzweig 151 verläuft, in dem das Ventilmittel 148 angeordnet ist. Dementsprechend kann durch Umschaltung des Ventilmittels 148 zwischen einer Freigabestellung und einer Blockierstellung entweder ein Fluidstrom durch die parallel geschalteten beiden Teilzweige 150 und 151 oder nur ein Fluidstrom durch den mit der Drossel 149 ausgestatteten Teilzweig 150 freigegeben werden. Somit ist das Ventilmittel 148 dazu vorgesehen, eine Umschaltung zwischen einer Freigabestellung für den Fluidkanal und einer Drosselstellung für den Fluidkanal zu ermöglichen.

## Patentansprüche

1. Fluidsystem mit einer sicherheitsgerichteten Ventilanordnung (3), die zur Beeinflussung eines Fluidstroms zwischen einer Fluidquelle (13) oder einem Steuerventil (2; 62) und einem Fluidverbraucher (59) ausgebildet ist und die ein Ventilgehäuse (14) umfasst, das einen ersten Fluidanschluss (29) für eine fluidische Verbindung mit einem Fluidanschluss einer Fluidquelle (13) oder eines Steuerventils (2; 62) und einen zweiten Fluidanschluss (30) zur Ankopplung eines Fluidverbrauchers (59) sowie einen Fluidkanal (35, 36, 37, 38) zwischen den Fluidanschlüssen (29, 30) aufweist, wobei im Fluidkanal (35, 36, 37, 38) ein erstes, zwischen einer Fluidzufuhrstellung oder Öffnungsstellung und einer Fluidabfuhrstellung oder Schließstellung elektrisch oder fluidisch ansteuerbares Ventilmittel (33) angeordnet ist, wobei ein zweites, zwischen einer Öffnungsstellung für den Fluidkanal und einer Drosselstellung für den Fluidkanal einstellbares, elektrisch oder fluidisch ansteuerbares Ventilmittel (48; 148) im Fluidkanal (35, 36, 37, 39) angeordnet ist und wobei in einem Abschnitt (36) des Fluidkanals (35, 36, 37, 38) zwischen dem ersten Ventilmittel (33) und dem zweiten Ventilmittel (48; 148) ein Sensormittel (45) zur Erfassung eines Fluiddrucks und zur Ausgabe eines fluiddruckabhängigen Sensorsignals angeordnet ist, sowie mit einer Steuereinrichtung (47), die zur Verarbeitung des Sensorsignals und zur Verarbeitung von Steuersignalen für die Ventilmittel (33, 48) ausgebildet ist.

2. Fluidsystem nach Anspruch 1, **dadurch gekennzeichnet, dass** die Steuereinrichtung (47) im Ventilgehäuse (14) angeordnet und für eine Ermittlung einer aus dem Sensorsignal und den Steuersignalen ermittelten Zustandsinformation ausgebildet ist und eine Schnittstelle (50) für eine Bereitstellung der Zustandsinformation aufweist.

3. Fluidsystem nach Anspruch 2, **dadurch gekennzeichnet, dass** die Steuereinrichtung (47) für eine unidirektionale oder bidirektionale Datenkommunikation mit einer übergeordneten Steuerungseinrichtung nach dem HART-Protokoll ausgebildet ist.

4. Fluidsystem nach Anspruch 1, **dadurch gekennzeichnet, dass** die Steuereinrichtung über eine elektrische Leitungsanordnung, insbesondere Busleitung oder Multipol, mit den Ventilmitteln und dem Sensormittel verbunden ist.

5. Fluidsystem nach einem der vorhergehenden Ansprüche, **dadurch gekennzeichnet, dass** die Steuereinrichtung (47) für eine von einem internen und/oder externen Signal auslösbare Durchführung eines Prüfvorgangs für das erste Ventilmittel (33) ausgebildet ist, wobei der Prüfvorgang wenigstens eine Bewegung des ersten Ventilmittels (33) zwischen der Öffnungsstellung und der Schließstellung sowie die Drosselstellung für das zweite Ventilmittel (48; 148) und einen Vergleich des Sensorsignals mit einem vorgebbaren Schwellwert beinhaltet.

6. Fluidsystem nach einem der vorhergehenden Ansprüche, **dadurch gekennzeichnet, dass** der sicherheitsgerichteten Ventilanordnung (3) wenigstens ein fluidisch vorgesteuertes Steuerventil (2) zugeordnet ist, wobei die sicherheitsgerichtete Ventilanordnung (3) in eine fluidische Steuerleitung (27, 28) des Steuerventils (2) eingeschleift ist und für eine Beeinflussung einer Stellung eines Ventilkörpers des Steuerventils (2) ausgebildet ist.

7. Fluidsystem nach Anspruch 6, **dadurch gekennzeichnet, dass** die Steuerleitung (27, 28) des Steuerventils (2) einen Steuerzweig (26) umfasst, der in fluidisch kommunizierender Verbindung mit einem Fluidanschluss (12) des Steuerventils steht, wobei im Steuerzweig (26) eine Drosseleinrichtung (31) angeordnet ist.

8. Fluidsystem nach einem der Ansprüche 1 bis 5, **dadurch gekennzeichnet, dass** der erste Fluidanschluss (29) der sicherheitsgerichteten Ventilanordnung (3) mit einem Fluidkanal (64, 65) eines Steuerventils (62) verbunden ist und dass der zweite Fluidanschluss (30) der sicherheitsgerichteten Ventilanordnung (2) als Fluidanschluss für den Anschluss des Fluidverbrauchers (59) ausgebebildet ist, wobei das Steuerventil (62) und die sicherheitsgerichtete Ventilanordnung (3) eine fluidische Reihenschaltung für eine redundante Beeinflussung eines freien Querschnitts des Fluidkanals (64, 65) ausgebildet sind.

9. Fluidsystem nach Anspruch 8, **dadurch gekennzeichnet, dass** das erste Ventilmittel (33) in einem ersten Ventilmodul (54) und das zweite Ventilmittel (48) in einem zweiten Ventilmodul (55) angeordnet sind und dass im Fluidkanal (36) des zweiten Ventilmoduls (48) zwischen dem ersten Ventilmittel (33) und dem zweiten Ventilmittel (48) ein Sperrventil (56) angeordnet ist, wobei das Sperrventil (56) eine mechanische Ventilbetätigung aufweist, die für eine Wechselwirkung mit dem ersten Ventilmodul (54) ausgebildet ist und die für eine Freigabestellung des Sperrventils (56) bei vorhandenem ersten Ventilmodul (54) eingerichtet ist.

10. Fluidsystem nach einem der vorhergehenden Ansprüche, **dadurch gekennzeichnet, dass** ein Sensor (62) elektrisch mit der Steuereinrichtung (47) verbunden ist und dass die Steuereinrichtung (47) für eine Bereitstellung von Steuersignalen für die Ventilmittel (33, 48) in Abhängigkeit von Sensorsignalen des Sensors (62) ausgebildet ist.

11. Prozessventil für eine Beeinflussung eines freien Querschnitts eines Fluidkanals, mit einem Ventilgehäuse, das von einem Fluidkanal durchsetzt ist, der in einen Eingangsanschluss und in einen Ausgangsanschluss mündet, die jeweils am Ventilgehäuse ausgebildet sind, mit einem beweglich im Ventilgehäuse aufgenommenen und für eine Beeinflussung eines freien Querschnitts des Fluidkanals ausgebildeten Ventilkörper, mit einem Fluidaktor, der für eine fluidgesteuerte Bewegungseinleitung auf den Ventilkörper ausgebildet ist und mit einem Fluidsystem nach einem der Ansprüche 1 bis 10.

## Claims

1. Fluid system with a safety-oriented valve assembly (3) which is designed to influence a fluid flow between a fluid source (13) or a control valve (2; 62) and a fluid load (59) and which comprises a valve housing (14) which has a first fluid connection (29) for a fluidic connection with a fluid connection of a fluid source (13) or a control valve (2; 62) and a second fluid connection (30) for coupling a fluid load (59) as well as a fluid channel (35, 36, 37, 38) between the fluid connections (29, 30), wherein a first valve (33) which can be electrically or fluidically actuated between a fluid supply position, or open position, and a fluid discharge position, or closed position, is arranged in the fluid channel (35, 36, 37, 38), wherein an electrically or fluidically actuable second valve (48; 148) which can be adjusted between an open position for the fluid channel and a throttle position for the fluid channel is arranged in the fluid channel (35, 36, 37, 38) and wherein a sensor (45) for detecting a fluid pressure and for outputting a fluid pressure-dependent sensor signal is arranged in a section (36) of the fluid channel (35, 36, 37, 38) between the first valve (33) and the second valve (48;148), as well as with a controller (47) which is designed to process the sensor signal and to process control signals for the valve (33, 48).

2. Fluid system according to claim 1, **characterised in that** the controller (47) is arranged in the valve housing (14) and is designed for determining status information determined from the sensor signal and the control signals and has an interface (50) for providing status information.

3. Fluid system according to claim 2, **characterised in that** the controller (47) is designed for unidirectional or bidirectional data communication with a superordinate control device according to the HART protocol.

4. Fluid system according to claim 1, **characterised in that** the controller is connected via an electric line arrangement, in particular a bus line or multipole lines, to the valve and the sensor.

5. Fluid system according to any one of the preceding claims, **characterised in that** the controller (47) is designed for carrying out a test operation for the first valve (33) which can be triggered by an internal and/or external signal, wherein the test operation includes at least one movement of the first valve (33) between the open position and the closed position and the throttle position for the second valve (48; 148) and a comparison of the sensor signal with a predefinable threshold value.

6. Fluid system according to any one of the preceding claims, **characterised in that** at least one fluidically pilotcontrolled control valve (2) is assigned to the safety-oriented valve assembly (3), wherein the safety-oriented valve assembly (3) is looped into a fluidic control line (27, 28) of the control valve (2) and is designed to influence a position of a valve body of the control valve (2).

7. Fluid system according to claim 6, **characterised in that** the control line (27, 28) of the control valve (2) has a control branch (26) which is in fluidically communicative connection with a fluid connection (12) of the control valve, wherein a throttle device (31) is arranged in the control branch (26).

8. Fluid system according to any one of claims 1 to 5, **characterised in that** the first fluid connection (29) of the safety-oriented valve assembly (3) is connected to a fluid channel (64, 65) of a control valve (62) and **in that** the second fluid connection (30) of the safety-oriented valve assembly (3) is designed as a fluid connection for the connection of the fluid load (59), wherein the control valve (62) and the safety-oriented valve assembly (3) are designed a fluidic series connection for a redundant influence of a free cross-section of the fluid channel (64, 65).

9. Fluid system according to claim 8, **characterised in that** the first valve (33) is arranged in a first valve module (54) and the second valve (48) is arranged in a second valve module (55) and **in that** a stop valve (56) is arranged in the fluid channel (36) of the second valve module (48) between the first valve (33) and the second valve (48), wherein the stop valve (56) has a mechanical valve actuation which is designed to interact with the first valve module (54) and which is configured for a release position of the stop valve (56) when the first valve module (54) is present.

10. Fluid system according to any one of the preceding claims, **characterised in that** a sensor (62) is electrically connected to the controller (47) and **in that** the controller (47) is designed to provide control signals for the valve (33, 48) as a function of sensor signals of the sensor (62).

11. Process valve for influencing a free cross-section of a fluid channel, having a valve housing which is passed by a fluid channel, which opens into an input connection and into an output connection which are respectively designed on the valve housing, having a valve body, which is movably received in the valve housing and designed to influence a free cross-section of the fluid channel, having a fluid actuator, which is designed for a fluid-controlled introduction of movement to the valve body, and having a fluid system according to any one of claims 1 to 10.

## Revendications

1. Système de fluide avec un agencement de soupape (3) de sécurité qui est réalisé pour l'influence d'un courant de fluide entre une source de fluide (13) ou une soupape de commande (2 ; 62) et un consommateur de fluide (59) et qui comporte un boîtier de soupape (14) qui présente un premier raccord de fluide (29) pour une liaison de fluide avec un raccord de fluide d'une source de fluide (13) ou d'une soupape de commande (2 ; 62) et un second raccord de fluide (30) pour le couplage d'un consommateur de fluide (59) ainsi qu'un canal de fluide (35, 36, 37, 38) entre les raccords de fluide (29, 30), dans lequel dans le canal de fluide (35, 36, 37, 38) un premier moyen de soupape (33) pouvant être commandé de manière électrique ou fluidique entre une position d'alimentation de fluide ou une position d'ouverture et une position d'évacuation de fluide ou une position de fermeture, dans lequel un second moyen de soupape (48 ; 148) pouvant être commandé de manière électrique ou fluidique, réglable entre une position d'ouverture pour le canal de fluide et une position d'étranglement pour le canal de fluide est agencé dans le canal de fluide (35, 36, 37, 39) et dans lequel dans une section (36) du canal de fluide (35, 36, 37, 38) entre le premier moyen de soupape (33) et le second moyen de soupape (48 ; 148) un moyen de détection (45) est agencé pour la détection d'une pression de fluide et pour l'émission d'un signal de capteur dépendant de la pression de fluide, ainsi qu'avec un dispositif de commande (47) qui est réalisé pour le traitement du signal de capteur et pour le traitement de signaux de commande pour les moyens de soupape (33, 48).

2. Système de fluide selon la revendication 1, **caractérisé en ce que** le dispositif de commande (47) est agencé dans le boîtier de soupape (14) et est réalisé pour une détermination d'une information d'état déterminée à partir du signal de capteur et des signaux de commande et présente une interface (50) pour une fourniture de l'information d'état.

3. Système de fluide selon la revendication 2, **caractérisé en ce que** le dispositif de commande (47) est réalisé pour une communication de données unidirectionnelle ou bidirectionnelle avec un dispositif de commande supérieur selon le protocole HART.

4. Système de fluide selon la revendication 1, **caractérisé en ce que** le dispositif de commande est relié par le biais d'un agencement de câble électrique, en particulier câble bus ou multipôle, aux moyens de soupape et au moyen de détection.

5. Système de fluide selon l'une des revendications précédentes, **caractérisé en ce que** le dispositif de commande (47) est réalisé pour une réalisation déclenchable par un signal interne et/ou externe d'un processus de vérification pour le premier moyen de soupape (33), dans lequel le processus de vérification contient au moins un mouvement du premier moyen de soupape (33) entre la position d'ouverture et la position de fermeture ainsi que la position d'étranglement pour le second moyen de soupape (48 ; 148) et une comparaison du signal de capteur avec une valeur seuil prescriptible.

6. Système de fluide selon l'une des revendications précédentes, **caractérisé en ce qu'**au moins une soupape de commande (2) précommandée de manière fluidique est associée à l'agencement de soupape (3) de sécurité, dans lequel l'agencement de soupape (3) de sécurité est inséré dans un câble de commande (27, 28) fluidique de la soupape de commande (2) et est réalisé pour une influence d'une position d'un corps de soupape de la soupape de commande (2).

7. Système de fluide selon la revendication 6, **caractérisé en ce que** le câble de commande (27, 28) de la soupape de commande (2) comporte une branche de commande (26) qui est en liaison de communication de fluide avec un raccord de fluide (12) de la soupape de commande, dans lequel un dispositif d'étranglement (31) est agencé dans la branche de commande (26).

8. Système de fluide selon l'une des revendications 1 à 5, **caractérisé en ce que** le premier raccord de fluide (29) de l'agencement de soupape (3) de sécurité est relié à un canal de fluide (64, 65) d'une soupape de commande (62) et que le second raccord de fluide (30) de l'agencement de soupape (2) de sécurité est réalisé en tant que raccord de fluide pour le raccord du consommateur de fluide (59), dans lequel la soupape de commande (62) et l'agencement de soupape (3) de sécurité sont réalisés un circuit en série de fluide pour une influence redondante d'une section transversale libre du canal de fluide (64, 65).

9. Système de fluide selon la revendication 8, **caractérisé en ce que** le premier moyen de soupape (33) est agencé dans un premier module de soupape (54) et le second moyen de soupape (48) est agencé dans un second module de soupape (55) et qu'une soupape de verrouillage (56) est agencée dans le canal de fluide (36) du second module de soupape (48) entre le premier moyen de soupape (33) et le second moyen de soupape (48), dans lequel la soupape de verrouillage (56) présente un actionnement de soupape mécanique qui est réalisé pour une interaction avec le premier module de soupape (54) et qui est conçu pour une position de libération de la soupape de verrouillage (56) en présence du premier module de soupape (54).

10. Système de fluide selon l'une des revendications précédentes, **caractérisé en ce qu'**un capteur (62) est relié de manière électrique au dispositif de commande (47) et que le dispositif de commande (47) est réalisé pour une fourniture de signaux de commande pour les moyens de soupape (33, 48) en fonction de signaux du capteur (62).

11. Soupape de processus pour une influence d'une section transversale libre d'un canal de fluide, avec un boîtier de soupape qui est traversé par un canal de fluide qui débouche dans un raccord d'entrée et dans un raccord de sortie qui sont réalisés respectivement au niveau du boîtier de soupape, avec un corps de soupape reçu de manière mobile dans le boîtier de soupape et réalisé pour une influence d'une section transversale libre du canal de fluide, avec un actionneur de fluide qui est réalisé pour une introduction de mouvement commandée par fluide sur le corps de soupape et avec un système de fluide selon l'une des revendications 1 à 10.
